# EUROPEAN PATENT APPLICATION

(11) **EP 2 666 847 A1**
(43) Date of publication of application: **27.11.2013**
(21) Application number: 11855992.1
(22) Date of filing: 24.08.2011
(51) Int. Cl.: C10L 9/08, C10L 5/00, F16B 3/06

(54) **METHOD FOR EVAPORATING AND DEHYDRATING SOLID MATERIAL**

(30) Priority: 20.01.2011 CN 201110022014
(71) Applicant: Xu, Bin, Shenzhen, Guangdong 518000 (CN)
(72) Inventor: CHU, Lalin, Changchun Jilin 130062 (CN); MA, Hongsong, Changchun Jilin 130000 (CN)
(74) Representative: Kolster Oy Ab
(86) International application number: PCT/CN2011/078819
(87) International publication number: WO 2012/097593

(57) **Abstract**

Disclosed is a method for evaporating and dehydrating a solid material; the method comprises: providing a plurality of digesters, with the digesters being in a parallel connection with respect to the flow direction of the solid material, wherein each digester repeatedly performs the arranged steps of step-by-step heating and evaporating and dehydrating the solid material from low temperatures to high temperatures in a time sequence. The solid material is brown coal. The quality of the brown coal is improved by the method.

## Description

### Technical Field

The present invention relates to a method for dehydrating a solid material.

### Background Art

Brown coal (lignite) is a coal with a relatively low degree of coalification, contains very high moisture, is prone to air-slake in air, and has certain amount of original humic acid and a volatile content of 45-55%. Due to its high moisture, low heat value, easiness of air-slake and spontaneous combustion, and high transportation cost per unit energy, brown coal is unfavourable for long-distance transportation and storage. Brown coal also has a very low direct combustion thermal efficiency. When brown coal is used as a raw material in processes of liquefaction, dry distillation and gasification, the moisture in coal should be reduced to 10% or below. Thus, upgrading of brown coal becomes a key factor for high performance development and utilization thereof. The so-called "upgrading of brown coal" refers to that brown coal changes in composition and structure and is converted to an upgraded coal with properties similar to those of soft coal during the dehydration, shaping and thermal decomposition processes. Many existing techniques for upgrading of brown coal are introduced by SHAO Junjie in 'The development status of brown coal quality improvement technology and development trend of China's brown coal quality improvement technology', Journal of Shenhua Science and Technology, 2nd issue, April 2009.

The most relevant processes to the present invention are mainly the D-K non-evaporation dehydration process and the K-Fuel process. J-Power (D) and Kawasaki Heavy Industries (K) of Japan started research in 1976 and successfully developed the D-K non-evaporation dehydration process. The D-K dehydration technology can achieve the removal of moisture in liquid state from brown coal by heating the brown coal moisture under a non-evaporation condition, in which the change in coal quality is similar to natural coalification.

The K-Fuel process is disclosed by KFx Inc. (US) in Patent Application, 'Method and apparatus for thermally upgrading carbonaceous materials' (Chinese Patent Publication No.: CN1989227A). In this process, carbonaceous materials are thermally upgraded in a pressurized steam environment to remove moisture and other byproducts. A variety of water/solid separation devices may be employed in a processing vessel to maximize moisture removal from the upgraded charge. Heating medium inlet nozzles and processing chamber vents are strategically positioned at the processing vessel wall to minimize short circulating of heating medium to vessel outlet vents and to continuously separate hot water removed from the charge and condensed steam, such that the upgraded material removed from the processing vessel does not carry free moisture when it is discharged. After upgrading, the charge may be rehydrated to improve stability during transportation and storage.

However, the above processes both have drawbacks. The digesting apparatus as disclosed by CN1989227A has a complex structure. Especially, the device for separating gas, liquid and solid from each other performs on a separate liquid separator, and the liquid separator comprises a rotating perforated table or a perforated cone and a perforated tube placed inside the apparatus as well as a separation table placed in a lower portion of the apparatus, in which only the perforated tube contributes to the liquid-solid separation, while the rotating perforated table and the separation table seriously occupy the inner space of the apparatus. In addition, this patent requires that the rotating perforated table and the separation table are rotatable, therefore corresponding power devices and drive devices are required to be equipped in the apparatus, and these power devices and drive devices are resistant to the high temperature and high pressure in the apparatus, which further makes the apparatus more complex. Moreover, in this patent, the perforated tube is merely useful for discharging water, while the import and export of steam would depend on multiple steam inlets and steam outlets positioned along the height direction of the apparatus, which makes the apparatus become more complex. Also, the method of this patent does not use the flash steam and the hot water generated during the digesting process to pre-heat the charge, so that the consumption of the live steam (heat energy) is high (about 2-3 times of the value of the process according to the present invention). Further, the K-Fuel technology digester has upper and lower locking hoppers, digests continuously, and charges (discharges) discontinuously, in which the material containing brown coal passes the locking hopper under a pressure difference and the solid matters in the material abrade the valves seriously; in addition, it is difficult for the lower locking hopper to discharge free water completely prior to discharging, which results in negative effects on the upgrading efficiency.

At present, the D-K non-evaporation dehydration technology can only be practiced in a semi-continuous operation manner, which influences the production capacity and operation stability of the apparatus, and the water content of brown coal after digestion is still relatively high, which is to be further reduced.

Thus, it is desired to further develop the brown coal upgrading technology to overcome the above drawbacks.

### Brief Description of the Invention

The present invention relates to a method for dehydration of a solid material via multiple-effect evaporation, comprising:
providing a plurality of digesters, with the digesters being in a parallel connection with respect to the flow direction of the solid material, wherein each digester repeatedly performs the following steps arranged in a time sequence:
   i. charging in a solid material and a hot water, and performing a first heating of the solid material using the hot water;
   ii. feeding a first steam to perform a second heating of the solid material, and discharging the condensed water generated in this step;
   iii. feeding a second steam to perform a third heating of the solid material, and discharging the condensed water generated in this step;
   iv. feeding a saturated steam to perform a fourth heating of the solid material to make it reach a predetermined temperature thereof, and discharging the condensed water generated in this step;
   v. feeding an superheated steam to digest the solid material reaching the predetermined temperature to evaporate moisture contained in the solid material, while the superheated steam becomes a saturated steam, and the saturated steam is discharged during the digesting process;
   vi. performing a first pressure reduction of the digester, and discharging a third steam;
   vii. performing a second pressure reduction of the digester, and discharging a fourth steam;
   viii. allowing the digester to restore normal pressure, and discharging the solid material.

In a preferred embodiment, at least part of the digesters are further subjected to a step ix between the above step vii and step viii: subjecting the digesters to a vacuum treatment to continuously evaporate residual moisture in the solid material and to further reduce the moisture content of the solid material.

In a more preferred embodiment, for part of the digesters, the condensed water discharged from other digesters in step ii and/or iii and/or iv is used as hot water and/or the hot water is separately provided by a water heater to allow the digesters to perform step i; and/or the fourth steam from other digesters is used as the first steam to allow the digesters to perform step ii; and/or the third steam from other digesters is used as the second steam to allow the digesters to perform step iii; and/or the saturated steam discharged from other digesters in step v is used as the saturated steam for the digesters in step iv.

### Brief Description of the Drawings

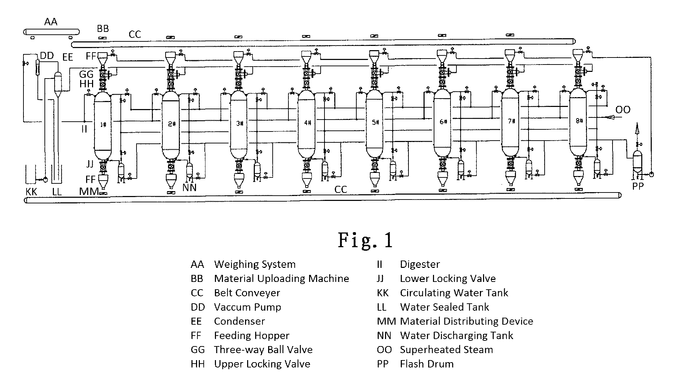

Fig.1 is a schematic process flow diagram of an embodiment of the present invention. The drawings are merely used for illustration, rather than limiting the scope of the present invention in any way.

### Detailed Description of the Invention

The method for dehydration of a solid material via multiple-effect evaporation according to the present invention is described in details as below.

The solid material herein is a water-containing solid matter, such as brown coal. Natural brown coal all contains a large amount of moisture. In a preferred embodiment, the brown coal is subjected to washing and leaching with water at a temperature of greater than 30°C, which also contains a large amount of moisture, wherein the moisture thereof is desired to be removed. The solid material is preferably in a bulk or particulate shape.

The steam in the present invention refers to water steam.

In order to achieve the present invention, it is required to provide a plurality of digesters, wherein the digesters are in a parallel connection with respect to the flow direction of the solid material, that is, the solid material from a common upstream procedure enters into the digesters in parallel, wherein the entering time may be the same or with a time interval between each other, preferably with a time interval between each other. The solid material is treated in each of the digesters respectively, and the treated solid material is discharged from the digesters, wherein the discharging time may be the same or also with a time interval between each other, preferably with a time interval between each other. The discharged solid material enters a common downstream procedure. The time interval can be specifically determined by those in the art according to the time consumption of each of steps as executed by each of the digesters described as following.

In the present invention, each of the digesters comprises a solid material inlet, a solid material outlet, a steam inlet, a steam outlet, a hot water inlet, and a condensed water outlet, wherein the solid material inlet is positioned around the top of the digester, the solid material outlet and the condensed water outlet are positioned around the bottom of the digester, while the steam inlet and the steam outlet can be positioned in any suitable position of the digester, for example, positioned in the upper portion of the digester. The hot water inlet can also be positioned in any suitable position of the digester, for example, positioned in the middle-lower portion of the digester. In a preferred embodiment, the condensed water outlet and the steam outlet can be combined into one outlet, which is preferably positioned around the bottom of the digester. More details of the internal structure of the digester can be seen in another patent application of the same applicant, 'Digesters for digesting solid material', and the entire content of this patent application is hereby incorporated into the present invention by reference.

There are many auxiliary devices connected to the digesters of the present invention. For example, the digester has a upper locking valve connected to it at the solid material inlet, while the upper locking valve is also in connection with a three-way ball valve and a feeding hopper, so that the solid material enters the digester from the solid material inlet sequentially via the feeding hopper, the three-way ball valve and the upper locking valve, as shown in Fig.1. The digester has a lower locking valve connected to it at the solid material outlet, and the lower locking valve is in connection with a feeding hopper and a distributor sequentially. Other inlets and outlets are in connection with corresponding discharge pipelines, such as water discharge pipelines and steam discharge pipelines, or supply pipelines, such as water supply pipelines and steam supply pipelines. All these auxiliary devices and corresponding pipelines are positioned in a manner that enables to achieve the present invention, and these specific positioning manners are neither crucial to the content of the present invention, nor are limited to the specific manners as shown in Fig.1.

Each of the digesters herein performs repeatedly the following steps arranged in a time sequence:
i. charging in a solid material and a hot water, and performing a first heating of the solid material using the hot water. The solid material herein is charged into the digester from the solid material inlet, the charging is stopped when solid material reaches a certain level, and then the solid material inlet is closed. The hot water is fed into the digester through the hot water inlet before, during or after charging, wherein the hot water has a temperature higher than that of the solid material. The hot water can be that supplied by a separate water heater or the condensed water discharged from other digesters in step ii and/or iii and/or iv, preferably the condensed water discharged from other digesters in step ii and/or iii and/or iv. After the hot water has reached the desired level, the hot water is stopped, and the hot water inlet is closed. After the hot water sufficiently heats the solid material, the used hot water can be discharged from the digester preferably via the condensed water outlet, and the discharged used hot water can be further used for other purposes, for example, it can be used for washing and leaching treatment of an original solid material to remove the fine powder and sulfur content contained therein. Alternatively, the used hot water may temporarily not be discharged in step i, but discharged together with the condensed water generated in step ii or iii under the pressure of the first steam or the second steam as fed in step ii or iii.
ii. feeding a first steam to perform a second heating of the solid material, and discharging the condensed water generated in this step. The first steam herein is fed from the steam inlet. The first steam has a first enthalpy value, and the following text will compare the enthalpy values of various steams used in the present invention sequentially. During the heating process, part of the first steam is subjected to phase change and forms condensed water, and the condensed water is discharged from the condensed water outlet in step ii. In the process according to the present invention, there is no limit on the source of the first steam, as long as it has the first enthalpy value. In a preferred embodiment of the present invention, the fourth steam from other digesters as described below is used as the first steam.
iii. feeding a second steam to perform a third heating of the solid material, and discharging the condensed water generated in this step. The second steam herein is also fed from the steam inlet. The second steam has a second enthalpy value, and the following text will compare the enthalpy values of various steams used in the present invention sequentially. During the heating process, a part of the second steam is subjected to phase change and forms condensed water, and the condensed water is discharged from the condensed water outlet in the step iii. In the process according to the present invention, there is no limit on the source of the second steam, as long as it has the second enthalpy value. In a preferred embodiment of the present invention, the third steam from other digesters as described below is used as the second steam.
iv. feeding a saturated steam to perform a fourth heating of the solid material to make it reach a predetermined temperature thereof, and discharging the condensed water generated in this step. The saturated steam herein refers to water steam at a certain temperature and under a saturated vapor pressure corresponding to this temperature. The predetermined temperature herein can be any desired temperature, which would be greater than 100°C, while its specific value can be determined as desired. Wherein, the saturated steam can also be fed into the digester from the steam inlet. In the process according to the present invention, there is no limit on the source of the saturated steam, as long as it is a saturated steam and has an enthalpy value higher than the second enthalpy value. In a preferred embodiment of the present invention, the saturated steam discharged from other digesters in step v is used as the saturated steam for the digester in step iv.
v. feeding an superheated steam to digest the solid material at the predetermined temperature to evaporate moisture in the solid material, while the superheated steam becomes a saturated steam, and the saturated steam is discharged during the digesting process. The superheated steam refers to a steam obtained by continuously elevating temperature on the basis of a saturated steam, which has an enthalpy value higher than that of the saturated steam. After the superheated steam is fed, the superheated steam can heat the solid material to evaporate moisture in the solid material, while the superheated steam is cooled and becomes a saturated steam, and the evaporated moisture becomes a saturated steam as well. These saturated steams are discharged from the digester from the saturated steam outlet during the digesting process. The discharged saturated steam can be fed into other digesters for use in step iv, so that the heat energy of this part of saturated steam can be sufficiently utilized. The superheated steam can be fed from the steam inlet, or from an additionally positioned superheated steam inlet. Theoretically, there is no new condensed water generated in step v, but a condensed water may be discharged continuously from the condensed water outlet in this step because in practical production, coal ash results in blocking which leads to a poor drainage, and there may also exist some condensed water that is not discharged completely in some previous steps. Step v is performed for a predetermined period, and this predetermined period can be specifically determined according to various factors such as the enthalpy value of the superheated steam, the desired water content of the solid material, and the internal pressure of the digester.
vi. performing a first pressure reduction for the digester, and discharging a third steam. The pressure reduction is performed by opening the steam outlet to discharge the steam in the digester, and the discharged steam during the pressure reduction is referred as the third steam in the present invention, and the third steam changes from a saturated status under the temperature condition in the digester into an unsaturated status during the pressure reduction and discharging process. With performing of the pressure reduction, moisture in the solid material is also subjected to flash evaporation and thus generates part of the steam also, which further reduces the moisture content of the solid material, and the steam generated by flash evaporation under reduced pressure is also contained in the third steam and with which is discharged from the digester. The third steam can be fed into other digesters in step iii and act as the second steam for the other digesters, and this also leads to a pressure balancing between the digester in step vi and the digester in step iii. The first pressure reduction is completed when the two digesters have the same pressure.
vii. performing a second pressure reduction of the digester, and discharging a fourth steam. After the first pressure reduction is completed, the digester still has a certain pressure. At this point, the second pressure reduction is performed by opening the steam outlet and discharging steam in the digester, and the steam discharged in this pressure reduction step is referred as the fourth steam. With performing of the pressure reduction, moisture in the solid material is continuously subjected to flash evaporation and thus generates part of the steam, which leads to a further reduction of the moisture content of the solid material, and the steam generated by this flash evaporation is also contained in the fourth steam and with which is discharged from the digester. The fourth steam can be fed into other digesters in step ii and act as the first steam for the other digesters, and this also leads to a pressure balancing between the digester in step vii and the digester in step ii. The second pressure reduction is completed when the two digesters have the same pressure, and the pressure in the digesters has already been close to normal pressure at this point.
viii. allowing the digester to restore normal pressure, and discharging the solid material. The operation for restoring normal pressure herein can be performed by opening any opening to communicate the digester with atmosphere. After pressure in the digester reaches normal pressure, the solid material outlet is opened to discharge the fully dehydrated solid material. Since this discharging operation is performed under normal pressure, the abrasion on the discharging valve caused by the solid material can be reduced. The discharged solid material enters the following procedure for other treatment.

In a preferred embodiment of the present invention, at least part of the digesters are further subjected to a step ix between step vii and step viii, wherein the step ix comprises: subjecting the digesters to a vacuum treatment to continuously evaporate residual moisture in the solid material and to further reduce the moisture content of the solid material. The vacuum treatment is performed by a vacuum orifice positioned on the digester. The vacuum orifice can be a separately positioned vacuum orifice or an existing outlet or inlet that is concurrently used as a vacuum orifice. Preferably, any of the solid material inlet, the steam outlet, the hot water inlet and the condensed water outlet is concurrently used as the vacuum orifice, more preferably, the solid material inlet and the condensed water outlet are concurrently used as the vacuum orifices, most preferably, the condensed water outlet is concurrently used as the vacuum orifice. Advantages thereof are that the discharge of condensed water that can hardly be discharged completely under a non-vacuum condition may be maximized, and even discharged completely. The pressure in the digester reaches a certain negative pressure by vacuuming, such as a gauge pressure of -80 to -90kPa, which contributes to a further evaporation of moisture in the solid material, so that the moisture content of the solid material is further reduced. The vacuum treatment is performed for a predetermined period.

In a more preferred embodiment, for part of the digesters, the condensed water discharged from other digesters in step ii and/or iii and/or iv is used as hot water and/or the hot water is provided by a separate water heater to allow the digesters to perform step i; and/or the fourth steam from other digesters is used as the first steam to allow the digesters to perform step ii; and/or the third steam from other digesters is used as the second steam to allow the digesters to perform step iii; and/or the saturated steam discharged from other digesters in step v is used as the saturated steam for the digesters in step iv. The advantages for these operations are the sufficient utilization of the heat energy of the condensed water and various steams and achieving the maximum of the thermal efficiency.

In the present invention, the order of enthalpy values of various steams is as follows: the superheated steam > the saturated steam > the third steam > the fourth steam; or the superheated steam > the saturated steam > the second steam > the first steam.

The number of the plurality of digesters and the steps where the plurality of digesters are subjected to are adjusted to achieve that at every moment, there is always at least one digester that is performing step i, at least one digester that is performing step ii, ... and so on, ... at least one digester that is performing step viii. In a preferred embodiment, there is also at least one digester that is performing step ix. The outlet and inlet of each digester is adjusted when performing each step, so that the open or close state thereof will meet the requirements for performing each step. In addition, steam pipelines, water pipelines and valves among the digesters are positioned and adjusted so that the circulating the required steam fluid and condensed water among these digesters can be realized. The positioning and adjustments of outlets, inlets, pipelines and valves are well known by those skilled in the art, and are not discussed in details herein. Thus, the digesting operation in a substantially continuous manner as a whole can be realized.

Fig.1 schematically illustrates a diagram of a plurality of digesters as connected in a parallel manner and the arrangement of the pipelines and valves among these digesters, in which these pipelines and valves are positioned so as to achieve the purpose of the present invention. Such arrangement can be carried out by those skilled in the art and is not limited to the specific manner as shown in the drawing.

In the present invention, the term 'a plurality of' refers to at least 2, such as 6, 8, 9 or more. It should be noted that although the drawing and the following examples use 8 or 9 digesters for illustration, this is merely to facilitate the description of the examples and the understanding of the present invention, and it does not mean that only 8 or 9 digesters can achieve or continuously achieve the method of the present invention. As mentioned above, the term 'a plurality of' refers to at least 2 in the present invention. Those skilled in the art can calculate the specific number of digesters to be used according to the specific time needed for each step so as to carry out the continuous operation of the method of the present invention.

### Examples

The following examples are merely used to illustrate the technical scheme of the present invention, and are not intended to limit the scope of the present invention in any way. For example, although the following examples use water-containing brown coal as the solid material for dehydration via evaporation, those skilled in the art would understand that the method of the present invention is not merely limited to dehydration of water-containing brown coal via evaporation, but is suitable for any water-containing solid material. For another example, the specific numbers as listed in the examples are merely to provide the details of experiment, and are not intended to limit the claims in any way. For a further example, although the examples provide some preferred embodiments according to the present invention, which does not mean that the protection scope of the present invention is limited to these preferred embodiments. The protection scope of the present invention is determined by the claims only.

### Example 1

The steps of various digesters were shown in Fig.1, 8 digesters were provided and numbered as 1-8 respectively, water-containing brown coal entered these 8 digesters respectively via a feeding hopper, a three-way ball valve and an upper locking valve on top of each digester through a weighing system, a material uploading machine and a belt conveyer sequentially, and each digester repeatedly performed the above steps i to viii in a time sequence. In addition, at any moment the operations performed by various digesters are as following: digester 1 was performing step i, digester 2 was performing step ii ... and so on, digester 8 was performing step viii, without vacuum treatment. Wherein, the saturated steam discharged from digester 5 was used as the saturated steam for digester 4, the third steam discharged from digester 6 was used as the second steam for digester 3 until the two digesters reached a balanced pressure, and the fourth steam discharged from digester 7 was used as the first steam of the digester 2 until the two digesters reached a balanced pressure. Wherein, step vi was carried out for 30 min, the saturated steam (containing non-condensable gases such as volatiles of coal) to be fed had a pressure of 4.0MPa (gauge pressure, and all pressures herein were gauge pressures), a temperature of 230-252°C, and a corresponding saturated steam (100% water steam) pressure of 2.7-4.0MPa; step v was carried out for 15 min, and the superheated steam to be fed had a temperature of 400°C and a pressure of 4MPa. The upgraded brown coal was discharged from the solid material outlets of various digesters, reached a belt conveyer via a lower locking valve, a feeding hopper and a material distributing device, and then was conveyed to subsequent steps. The properties of the raw brown coal and the upgraded brown coal are shown in Table 1.

**Table 1**

| | Total moisture, wt% | Ash content on dry basis, wt% | Volatile content on ash-free dry basis, wt% | Net calorific value on received basis, calorie/g |
|---|---|---|---|---|
| Raw brown coal | 33.45 | 15.72 | 46.26 | 3578 |
| Upgraded brown coal | 12.68 | 15.74 | 46.42 | 5053 |

Wherein, the criteria of chemical laboratory analysis were: the total moisture of coal was measured according to GB/T211-2007; the analytical moisture, ash content and volatile content of coal were measured according to Industrial Analysis of Coal, GB/T212-2008; the calorific value of coal was measured according to GB/T213-2008. Wherein the dry basis means that percentage contents of materials are calculated using the mass of coal which is dried and dehydrated completely as denominator, the ash-free dry basis means that percentage contents of materials are calculated using the mass of coal which is dried and dehydrated and from which ash is removed as denominator, and the received basis means the coal as received is used as basis. The coal discharged from step viii had a temperature of 100-110°C.

### Example 2

Various digesters were positioned as shown in Fig.1, but 9 digesters were provided and numbered as 1-9. Water-containing brown coal entered these 9 digesters respectively, and each digester repeatedly performed the above steps i to ix in a time sequence, and at any moment, the operations performed by various digesters are as following: digester 1 was performing step i, digester 2 was performing step ii ... and so on, digester 8 was performing step viii, and digester 9 was performing step iv. Wherein, the saturated steam discharged from digester 5 was used as the saturated steam for digester 4, the third steam discharged from digester 6 was used as the second steam for digester 3 until the two digesters reached a balanced pressure, and the fourth steam discharged from the digester 7 was used as the first steam for digester 2 until the two digesters reached a balanced pressure. Wherein, step vi was carried out for 20 min, the saturated steam (containing non-condensable gases such as volatiles of coal) to be fed had a pressure of 4.0MPa, a temperature of 230-252°C, and a corresponding saturated steam (100% water steam) pressure of 2.7-4.0MPa; step v was carried out for 20 min, and the superheated steam to be fed had a temperature of 400°C and a pressure of 4MPa; the relative vacuum degree was -0.08MPa in step ix, and the vacuum treatment was carried out for 30 min. The properties of the raw brown coal and the upgraded brown coal are shown in Table 2, and the coal discharged from step viii had a temperature of 70-80°C.

**Table 2**

| | Total moisture, wt% | Ash content on dry basis, wt% | Volatile on ash-free dry basis, wt% | Net calorific value on received basis, calorie/g |
|---|---|---|---|---|
| Raw brown coal | 35.19 | 16.44 | 45.41 | 3437 |
| Upgraded brown coal | 6.37 | 16.05 | 43.48 | 5460 |

### Example 3

Various digesters were positioned as shown in Fig.1, but 9 digesters were provided and numbered as 1-9. Water-containing brown coal entered these 9 digesters respectively, and each digester repeatedly performed the above steps i to ix in a time sequence, and at any moment, the operations performed by various digesters are as following: digester 1 was performing step i, digester 2 was performing step ii ... and so on, digester 8 was performing step viii, and digester 9 was performing step iv. Wherein, the saturated steam discharged from the digester 5 was used as the saturated steam for digester 4, the third steam discharged from the digester 6 was used as the second steam for digester 3 until the two digesters reached a balanced pressure, and the fourth steam discharged from the digester 7 was used as the first steam for digester 2 until the two digesters reached a balanced pressure. Wherein, step vi was carried out for 10 min, the saturated steam (containing non-condensable gases such as volatiles of coal) to be fed had a pressure of 4.0MPa, a temperature of 230-252°C, and a corresponding saturated steam (100% water steam) pressure of 2.7-4.0MPa; step v was carried out for 10 min, and the superheated steam to be fed had a temperature of 400°C and a pressure of 4MPa; the relative vacuum degree was -0.08MPa in step ix, and the vacuum treatment was carried out for 30 min. The properties of the raw brown coal and the upgraded brown coal are shown in Table 3, and the coal discharged from step viii had a temperature of 65-75°C.

**Table 3**

| | Total moisture, wt% | Ash content on dry basis, wt% | Volatile on ash-free dry basis, wt% | Net calorific value on received basis, calorie/g |
|---|---|---|---|---|
| Raw brown coal | 35.15 | 16.92 | 45.79 | 3368 |
| Upgraded brown coal | 12.67 | 16.51 | 44.98 | 4819 |

### Example 4

Various digesters were positioned as shown in Fig.1, but 9 digesters were provided and numbered as 1-9. Water-containing brown coal entered these 9 digesters respectively, and each digester repeatedly performed the above steps i to ix in a time sequence, and at any moment, the operations performed by various digesters are as following: digester 1 was performing step i, digester 2 was performing step ii ... and so on, digester 8 was performing step viii, and digester 9 was performing step iv. Wherein, the saturated steam discharged from digester 5 was used as the saturated steam for digester 4, the third steam discharged from digester 6 was used as the second steam for digester 3 until the two digesters reached a balanced pressure, and the fourth steam discharged from digester 7 was used as the first steam for digester 2 until the two digesters reached a balanced pressure. Wherein, step vi was carried out for 20 min, the saturated steam (containing non-condensable gases such as volatiles of coal) to be fed had a pressure of 3.0MPa, a temperature of 210-235°C, and a corresponding saturated steam (100% water steam) pressure of 1.8-3.0MPa; step v was performed for 20 min, and the superheated steam to be fed had a temperature of 400°C and a pressure of 3MPa; the relative vacuum degree was -0.08MPa in step ix, and the vacuum treatment was carried out for 30 min. The properties of the raw brown coal and the upgraded brown coal are shown in Table 4, and the coal discharged from step viii had a temperature of 70-80°C.

**Table 4**

| | Total moisture, wt% | Ash content on dry basis, wt% | Volatile on ash-free dry basis, wt% | Net calorific value on received basis, calorie/g |
|---|---|---|---|---|
| Raw brown coal | 32.3 | 24.39 | 47.13 | 3336 |
| Upgraded brown coal | 17.08 | 24.09 | 47.06 | 4973 |

The advantages of the present invention are as follows:

The enthalpy value of the superheated steam was utilized stage-by-stage to heat the solid material and to perform evaporation and dehydration, and the thermal efficiency was high. In the present invention, there are five effects for utilizing the heat energy. The first effect is to use the heat released when the superheated steam changes into the saturated steam to heat the solid material; the second effect is to use the saturated steam to heat the solid material; the third effect is to use the third steam generated during the first pressure reduction to heat the solid material; the fourth effect is to use the fourth steam generated during the second pressure reduction to heat the solid material; and the fifth effect is to use the condensed water as hot water to heat the solid material. Thus, the heat energy of the superheated steam is sufficiently utilized stage-by-stage in thesequence of heat level from high to low. Further, the vacuum treatment of the present invention evaporates the residual moisture and additionally corresponds to the sixth effect of evaporation, which further reduces moisture of the solid material and reduces temperature of the final discharge. Under the circumstance that the discharge is upgraded brown coal, the reduced final discharge temperature is advantageous for prevent the upgraded brown coal from spontaneous combustion. Another advantage is that by positioning a plurality of digesters and arranging their pipeline connection relationship reasonably, a method for dehydration via multiple-effect evaporation can be performed continuously, which facilitates its industrial applications.

## Claims

1. A method for dehydration of a solid material via multiple-effect evaporation, comprising: providing a plurality of digesters, with the digesters being in a parallel connection with respect to the flow direction of the solid material, wherein each digester performs repeatedly the following steps arranged in a time sequence:
i. charging in a solid material and a hot water, performing a first heating of the solid material using the hot water;
ii. feeding a first steam to perform a second heating of the solid material, and discharging the condensed water generated in this step;
iii. feeding a second steam to perform a third heating of the solid material, and discharging the condensed water generated in this step;
iv. feeding a saturated steam to perform a fourth heating of the solid material to make it reach a predetermined temperature thereof, and discharging the condensed water generated in this step;
v. feeding an superheated steam to digest the solid material reaching the predetermined temperature to evaporate the moisture contained in the solid material, while the superheated steam becomes a saturated steam, and the saturated steam is discharged during the digesting process;
vi. performing a first pressure reduction of the digester, and discharging a third steam;
vii. performing a second pressure reduction of the digester, and discharging a fourth steam;
viii. allowing the digester to restore normal pressure, and discharging the solid material.

2. The method according to claim 1, wherein at least part of the digesters are further subjected to a step ix between step vii and step viii, wherein the step ix comprises: subjecting the digesters to a vacuum treatment to continuously evaporate residual moisture in the solid material and to further reduce the moisture content of the solid material.

3. The method according to claim 1 or 2, wherein for part of the digesters, the condensed water discharged from other digesters in step ii and/or iii and/or iv is used as hot water and/or the hot water is separately provided by a water heater to allow the digesters to perform step i; and/or the fourth steam from other digesters is used as the first steam to allow the digesters to perform step ii; and/or the third steam from other digesters is used as the second steam to allow the digesters to perform step iii; and/or the saturated steam discharged from other digesters in step v is used as the saturated steam for the digesters in step iv.

4. The method according to claim 1 or 2, wherein each of the digesters comprises a solid material inlet, a solid material outlet, a steam inlet, a steam outlet, a hot water inlet and a condensed water outlet.

5. The method according to claim 4, wherein the solid material inlet, the steam outlet or the condensed water outlet is concurrently used as a vacuum orifice.

6. The method according to claim 1, wherein the solid material is brown coal and the brown coal contains moisture.

7. The method according to claim 6, wherein the brown coal is a brown coal which has been subjected to washing and leaching with water at a temperature of greater than 30°C.

8. The method according to claim 1, wherein the plurality is at least 2, preferably at least 4, more preferably at least 6.

9. The method according to claim 4, wherein the steam outlet and the condensed water outlet are the same outlet.
